# EUROPEAN PATENT SPECIFICATION

(11) **EP 2 219 328 B1**
(45) Date of publication and mention of the grant of the patent: **19.11.2014**
(21) Application number: 08700568.2
(22) Date of filing: 02.01.2008
(51) Int. Cl.: H04Q 11/00, H04L 12/701, H04L 12/721, H04L 12/707, H04L 12/703, H04L 12/26

(54) **A method for soft re-routing in ASON**
Verfahren zum Soft-Rerouting in ASON
Procédé de reroutage conditionnel dans un réseau optique commuté automatique

(30) Priority: 21.11.2007 CN 200710124587
(43) Date of publication of application: 18.08.2010
(73) Proprietor: ZTE Corporation, Shenzhen, Guangdong 518057 (CN)
(72) Inventor: YANG, Faming, Guangdong 518057 (CN)
(74) Representative: Hatzmann, Martin
(86) International application number: PCT/CN2008/000008
(87) International publication number: WO 2009/065279

(56) References cited:
- EP-A2- 1 134 999
- CN-A- 1 520 102
- CN-A- 1 588 890
- CN-A- 1 710 869
- CN-A- 1 710 993
- CN-A- 1 710 993
- CN-A- 1 866 806
- CN-K1- 1 710 993
- US-A1- 2003 043 736
- "Architecture for the automatically switched optical network (ASON); G.8080/Y.1304 (06/06)", ITU-T STANDARD, INTERNATIONAL TELECOMMUNICATION UNION, GENEVA ; CH, no. G.8080/Y.1304 (06/06), 6 June 2006 (2006-06-06), pages 1-104, XP017563878, [retrieved on 2006-11-17]
- 'Recommendation G.841 - Types and characteristics of SDH network protection architectures' ITU-T RECOMMENDATION G.841 01 October 1998, pages 1 - 50, XP002275277

## Description

### Field of the Invention

The present invention relates to the optical communication field, in particular to a method for soft re-routing in an Automatic Switching Optical Network (ASON).

### Background of the Invention

With the rapid growth of traffic in the transmission network, especially the increased traffic of optical transmission network of the Synchronous Digital Hierarchy (SDH)/Wavelength Division Multiplexing (WDM) due to the rapid growth of the information volume of the data service, the means for providing service by manual configuration in the conventional optical network has become more and more unsuitable, especially the conventional means increase the operation costs. Just in such a situation, the ASON technology emerged and has been gradually applied, in which the service is automatically configured through automatically establishing connection by the signaling protocol interaction.

The ASON technology can not only provide service rapidly, but also provide a new route for a service being delivered in the network for the purpose of management and maintenance (e.g., route optimization, network maintenance, and plan engineering). A new connection is established following the new route by the signaling protocol interaction and the service is switched from the original connection to the new connection so as to conveniently and rapidly realize the purpose of management and maintenance, and optimize the network resources.

It is obvious that the operation for management and maintenance should not impact the delivery of the original service. Therefore, the International Standard G.8080 of the International Telecommunication Union (ITU) proposes a soft re-routing technology, which adopts the idea of "make-before-break" to solve the problem, i.e., a connection via the new route for replacing the original connection is first established, and then the original connection is deleted.

The soft re-routing technology of ITU G.8080 has not considered how to switch the original connection to the new connection. Since there is inconsistency of the service switching operations between the connection source and connection destination, a short interval of service interruption may occur.

In order to realize a hitless switching for the service during the soft re-routing process, The Patent, with a publication number of CN1710993 and titled with "An Optimization Method for the Service Path in a Smart Optical Network", proposed a new method with respect to the goal of service path optimization. This method performs, during a process of establishing a new label switching path (i.e., a new routing connection), dual transmission and selective receipt at the bifurcation point between the new label switching path and the label switching path to be optimized (i.e., the original connection), so as to comparatively rapid and automatically switch the service to the new label switching path based on dual transmission and selective receipt mechanism at the bifurcation point at the time of the new label switching path establishment being completed and the label switching path service to be optimized being then deleted. Although the method further reduces the interruption interval during the soft re-routing process, since the method performs switching based on the selective receipt mechanism, i.e., the switching is realized at the selective receipt point because of the failure resulted from deleting the original working connection, the method still induces a certain unneglectable time of service interruption interval (i.e., from the time of deletion actually occurring to the time of the failure being detected, and till the time of switching being completed).

ITU-T G.841 discloses rerouting after failure using bridges and switches (1+1 trail/SNC protection).

### Summary of the Invention

The technical problem solved in the present invention is to provide a soft re-routing method for the ASON, which enables the time of service interruption to be ignored.

The bridge-connection node in the content of the present invention hereinafter refers to such a node, through which the original connection and the re-routing connection pass in the service transmission direction, and at which the service on both the original connection and the re-routing connection is transmitted by using a same ingress port (for example, both of the original connection and the re-routing connection use the same link connection resource as the ingress port) and, different egress ports (for example, the original connection and the re-routing connection use different link connection resources as their own egress ports); bridge-connection operation refers to that the bridge-connection node transmits the service to the next node in the original connection and meanwhile transmits it to the next node in the re-routing connection.

The switching node in the content of the present invention hereinafter refers to such a node, through which the original connection and the re-routing connection pass in the service transmission direction, and at which the service to be transmitted uses different ingress ports (for example, the ingress ports use different link connection resources), while the service to be transmitted uses the same egress port (for example, the egress port uses the same link connection resource), while the switching operation refers to that the switching node stops receiving service from the original connection and starts to receive service from the re-routing connection.

The soft re-routing method for ASON according to the present invention is defined in claim 1.

The whole route of the re-routing connection refers to all of the nodes and the links of the re-routing connection.

### Step 1 comprises the steps as disclosed in claim 3.

Step A, the first node of the original connection to be re-routed determines the whole route of the re-routing connection with the same first node and the last node of the original connection;
Step B, the first node starts the establishing process of the re-routing connection at the current node, and sends a soft re-routing connection establishing request to the next node of the re-routing connection, wherein the establishing process of the connection at the current node includes performing the bridge-connection operation on the current node if the current node is a bridge-connection node;
Step C, after receiving the soft re-routing connection establishing request, except for the last node, each intermediate node of the re-routing connection starts the establishing process of the re-routing connection at the current node, and sends the soft re-routing connection establishing request to the next node, wherein the establishing process of the connection at the current node includes performing the bridge-connection operation on the current node if the current node is a bridge-connection node;
Step D, after receiving the soft re-routing connection establishing request, the last node starts the establishing process of the re-routing connection at the current node, and informing, after completing the re-routing establishment, the upstream node of the completion of the re-routing connection establishment, wherein the establishing process of the connection at the current node includes performing the bridge-connection operation on the current node if the current node is a bridge-connection node;
Step E, after receiving the information about the completion of the re-routing connection establishment, except for the first node, each intermediate node of the re-routing connection informing the upstream node of the completion of the re-routing connection establishment if the re-routing connection establishment at the current node is completed, otherwise waits for the completion of the re-routing connection establishment at the current node and then informs the upstream node of the completion of the re-routing connection establishment.

The first node determines the whole route of the re-routing connection according to the routing constraint information in a management plane request. When determining the whole route of the connection, the first node may employ one of the following two approaches to calculate the whole route of the connection.

The first node calculates the whole route according to the current routing topology resource, or requests other control unit, e.g. a Path Computation Element (PCE) calculates the whole route according to the current routing topology resource. Step 1 is automatically triggered by the first node of the original connection or manually triggered.

### Step 2 comprises the following steps:

a) after conforming the re-routing connection establishment being established, the first node monitors the re-routing connection in a certain timer period, and carries out the operation of the next step if there is no failure in the re-routing connection;
b) if the first node is a switching node, executes the switching operation, and then sends a service switching operation request to a downstream node of the re-routing connection, otherwise sends the service switching operation request to the next node directly; wherein if the re-routing connection and the original connection do not share link connection resource, the first node can directly send the switching request to the destination node or the next node, otherwise the first node shall send the switching request to the next node of the connection;
c) after receiving the service switching request, except for the last node, each intermediate node of the re-routing connection performs the switching operation if the current node is a switching node, and then sends the service switching operation request to the next node, otherwise sends the service switching request to the next node directly;
d) after receiving the service switching request, the last node first performs the switching operation, and then informs the first node of the completion of the switching operation if the current node is a switching node, otherwise informs the first node of the completion of the switching operation directly.

The re-routing connection and the original connection may use the link connection resources of the same transmission network.

The soft re-routing connection establishing request in step B includes a re-routing connection identifier.

In the present invention, the service switching operation is started to perform after the re-routing connection has been established and the service has been bridge-connected to the re-routing connection, and the switching operation is performed instantaneously; before switching, the service is transmitted and received via the original connection without failure, thereby the service interruption being avoided, that is to say, the time of the service interruption can be ignored.

### Brief Description of the Drawings

Fig.1 is a flow chart of the method according to an embodiment of the present invention;
Fig.2 is a schematic diagram of the original connection according to an embodiment of the present invention;
Fig.3 is a schematic diagram of the connection after the re-routing connection is established according to an embodiment of the present invention;
Fig.4 is a schematic diagram of the connection after service switching is completed according to an embodiment of the present invention;
Fig. 5 is a schematic diagram of the connection after the soft re-routing process is completed according to an embodiment of the present invention.

### Detailed Description of the Embodiments

The present invention will be described in detail in connection with the drawings.

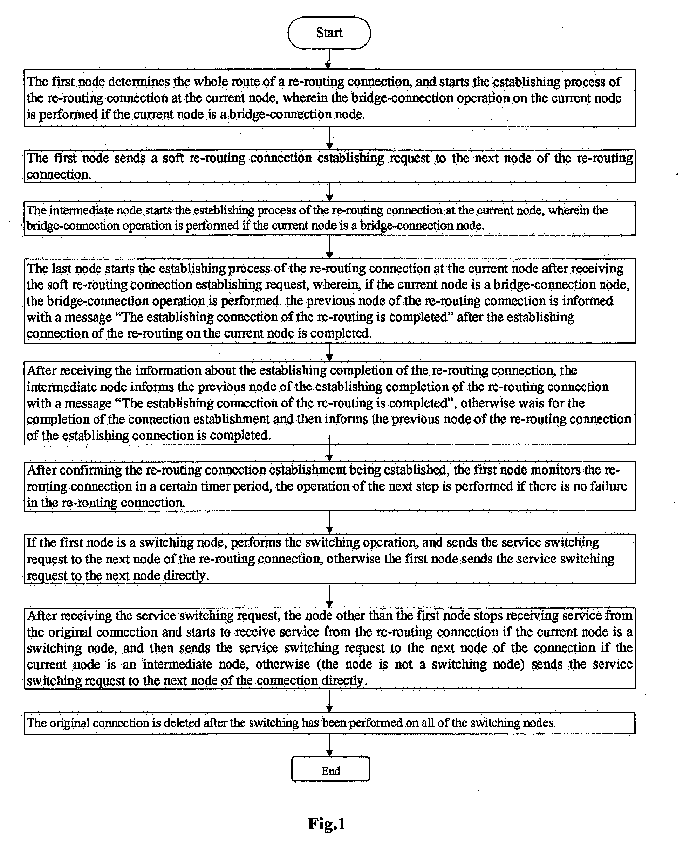

As shown in Fig.1, in the present embodiment, the network manager sends a soft re-routing request to the first node of the original connection which carries a uni-directional service, to trigger the ASON complete the re-routing connection process, which comprises the following steps,

Step 1, the first node of the original connection to be re-routed determines the whole route of a re-routing connection with the same first node and the last node of the original connection, and starts the establishing process of the re-routing connection at the current node: wherein the bridge-connection operation is performed if the current node is a bridge-connection node. Wherein, the whole route refers to all of the nodes and the links of the connection; the first node determines the whole route of the re-routing connection according to the routing constraint information in a management plane request, in which, the first node calculates the whole route of the connection according to the current route topology resource in case of no complete route being provided by the request of the network manager; the re-routing connection establishment process of the first node includes allocating the link connection resource required by the connection; the bridge-connection operation refers to that the bridge-connection node transmits the service to the next node in the original connection and meanwhile transmits it to the next node in the re-routing connection.

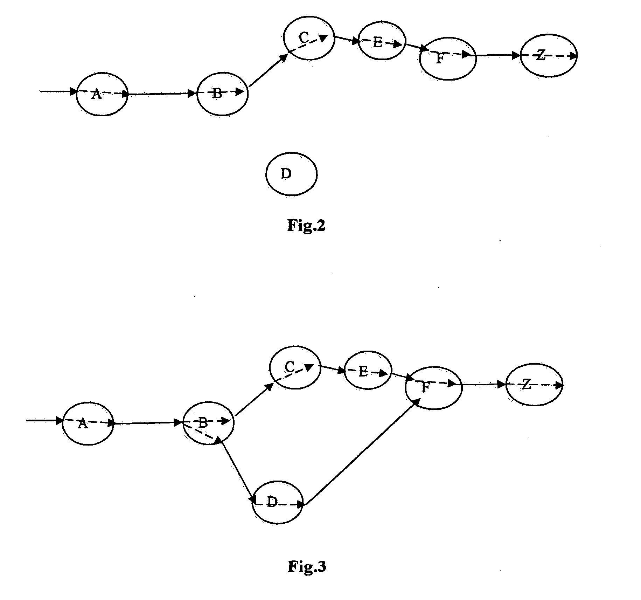

In Fig.2, Fig.3, Fig.4 and Fig.5, the circle denotes a node, the dashed line denotes a sub-network connection, and the solid line denotes a link connection.

As shown in Figs.2 and 3, the original connection passes through nodes A, B, C, E, F, Z, and the re-routing connection determined by the first node of the original connection passes through nodes A, B, D, F, Z, wherein the re-routing connection and the original connection use the same link connection resource between node A and node B, node B is a bridge-connection node, and the re-routing connection and the original connection use the same link connection resource between node F and node Z, F is a switching node. Since the first node selects the same connection resource (between node A and node B) as that of the original connection in the egress direction during the connection establishing process, so the first node is not a bridge-connection node, thus the first node do not need to perform the bridge-connection operation.

Step 2, the first node sends a soft re-routing connection establishing request to the next node in the re-routing connection, the soft re-routing connection establishing request includes a re-routing connection identifier;

Step 3, after receiving the soft re-routing connection establishing request, except for the last node, each intermediate node starts the establishing process of the re-routing connection at the current node; if the current node is a bridge-connection node, the bridge-connection operation being performed and the request of establishing connection being sent to the next node of the re-routing connection; if the current node is a switching node, a corresponding cross connection is unable to be established; an intermediate node sends the soft re-routing connection establishing request without waiting for the completion of the establishing process of the re-routing connection at the current node.

As seen in Fig.3, the intermediate network elements B, D, F passed by the re-routing connection need to be allocated with corresponding link connection resource. B is a bridge-connection node, and realizes the bridge-connection operation by establishing the sub-network cross connection of the re-routing connection at the current node. The sub-network cross connection is established at D; the sub-network cross connection of the re-routing connection at the current network element can not be established due to F is a switching node.

Step 4, the last node completes the establishing process of the re-routing connection at the current node after receiving the soft re-routing establishing connection request, and informs the upstream node of the re-routing connection with a message "The establishing connection of the re-routing is completed". Wherein, the process of establishing connection at the last node comprises allocating link connection resource.

As seen in Fig.3, at the last node network element Z, passed by the re-routing connection, the re-routing connection selects the same connection resource as that of the original connection at the ingress port (between node F and node Z), thus a new sub-network cross does not need to be established.

Step 5, after receiving the information about the completion of the re-routing establishing connection, except for the first node, each intermediate node of the re-routing connection informs the upstream node of the re-routing connection with a message "The establishing connection of the re-routing is completed" if the re-routing connection at the current being established, otherwise waits for the completion of the connection establishment and then informs the upstream node of the re-routing connection with the message "The establishing connection of the re-routing is completed".

Step 6, after confirming re-routing connection being completed, the first node monitors the re-routing connection in a certain time period, the operation of the next step is performed if there is no failure in the re-routing connection;

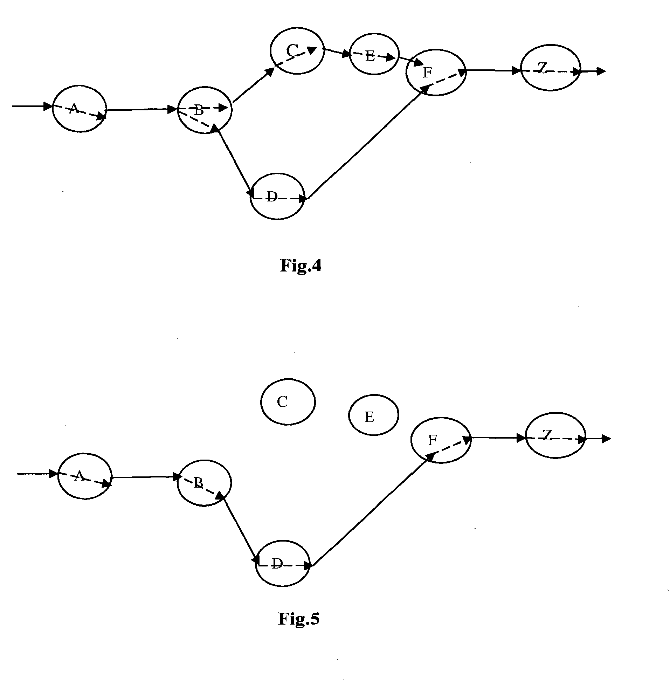

Step 7, the first node sends a service switching request to the next node of the re-routing connection, and all of the switching nodes passed by the re-routing connection performs the switching operation, that is to say, the switching node stops receiving service from the original connection and starts to receive service from the re-routing connection, which comprises the following steps:
a) if the first node is a switching node, executes the switching operation, and then sends a service switching operation request to a next node, otherwise sends the service switching operation request to the next node directly;
   as shown in Fig.4, the first node A sends a service switching request to node B;
b) after receiving the service switching request, the intermediate node performs the switching operation if the current node is a switching node, and then sends the service switching operation request to the next node, otherwise sends the service switching request to the next node directly;
   as shown in Fig.4, the intermediate nodes C and D are not switching nodes, thus send the service switching request directly to the downstream nodes D and F after the service switching request being received, node. F is a switching node, and after receiving the switching request, node F needs to delete the sub-network cross connection of the original connection at the current node, and then sends the request of service switching to the downstream node Z after the service switching has been completed.
c) after receiving the service switching request, the last node stops receiving service from the original connection and starts to receive service from the re-routing connection, and then informs the first node of the completion of the switching operation if the current node is a switching node, otherwise informs the first node of the completion of the switching operation directly.

As shown in Fig.4, Z is not a switching node, and thus informs the first node A of the completion of the switching.

Step 8, after receiving the information about the completion of the service switching of the last node, the first node initiates to delete the original connection, the original connection is deleted, the re-routing connection is completed.

As shown in Fig.5, the original connection has been deleted; the re-routing connection of the transmitting service is left.

As seen from the above technology scheme, after the re-routing connection has been established and service has been bridge-connected to the re-routing connection, it begins to perform the service switching operation, namely, it stops receiving service from the original connection, the service is received from the re-routing connection and then the original connection is deleted, thus the service interruption is avoided, or the time of the service interruption may be ignored, since the switching operation is completed instantaneously, before the switching, the service is send and received via original connection without fault.

## Claims

1. A method for soft re-routing in the Automatic Switching Optical Network, ASON, comprising:
Step 1, a first node (A) of an original connection to be re-routed determining a whole route of a re-routing connection with the same first node (A) and a same last node (Z) of the original connection; then initiating a soft re-routing connection establishing process, and during a connection establishment process of the soft re-routing, all of bridge-connection nodes (B) of the re-routing connection performing bridge-connection operation;
Step 2, after confirming the re-routing connection establishment being completed, the first node (A) sending a service switching request to downstream nodes of the re-routing connection (B, D, F, Z), all of the switching nodes (F) of the re-routing connection performing switching operation and informing, after the switching being completed, the first node(A) of the completion of the switching;
Step 3, the first node (A) deleting the original connection after receiving the information of the completion of service switching, and the re-routing connection being completed.

2. The method for soft re-routing in the ASON according to Claim 1, **characterized in that** the whole route of the re-routing connection refers to all of the nodes and links of the re-routing connection.

3. The method for soft re-routing in the ASON according to Claim 1, **characterized in that** Step 1 comprises the following steps:
Step A, the first node of the original connection to be re-routed determining the whole route of the re-routing connection with the same first node and the same last node of the original connection;
Step B, the first node starting the establishing process of the re-routing connection at the current node, and sending a soft re-routing connection establishing request to a next node of the re-routing connection, wherein the establishing process of the connection at the current node includes performing the bridge-connection operation on the current node if the current node is a bridge-connection node;
Step C, after receiving the soft re-routing connection establishing request, except for the last node, each intermediate node of the re-routing connection starting the establishing process of the re-routing connection at the current node, and sending the soft re-routing connection establishing request to the next node, wherein the establishing process of the connection at the current node includes performing the bridge-connection operation on the current node if the current node is a bridge-connection node;
Step D, after receiving the soft re-routing connection establishing request, the last node starting the establishing process of the re-routing connection at the current node, and informing, after completing the re-routing establishment, the upstream node of the completion of the re-routing connection establishment, wherein the establishing process of the connection at the current node includes performing the bridge-connection operation on the current node if the current node is a bridge-connection node;
Step E, after receiving the information about the completion of the re-routing connection establishment, except for the first node, each intermediate node of the re-routing connection informing the upstream node of the completion of the re-routing connection establishment if the re-routing connection establishment at the current node is completed, otherwise waiting for the completion of the re-routing connection establishment at the current node and then informing the upstream node of the completion of the re-routing connection establishment.

4. The method for soft re-routing in the ASON according to Claim 1, **characterized in that** the first node determines the whole route of the re-routing connection according to a routing constraint information in a management plane request, wherein when the first node determines the whole route of the connection, the method of calculating the whole route of the connection is:
the first node calculating the whole route according to the current routing topology resource; or
requesting other control unit to calculate the whole route of the connection.

5. The method for soft re-routing in the ASON according to Claim 1, **characterized in that** Step 1 is automatically triggered by the first node of the original connection or manually triggered.

6. The method for soft re-routing in the ASON according to Claim 1, **characterized in that** Step 2 comprises the following steps:
a) after confirming the re-routing connection establishment being completed, the first node monitoring the re-routing connection in a certain timer period, and carrying out the operation of the next step if there is no failure in the re-routing connection;
b) if the first node is a switching node, executing the switching operation, and then sending a service switching operation request to a downstream node of the re-routing connection, otherwise sending the service switching operation request to the next node directly; wherein if the re-routing connection and the original connection do not share link connection resource, the first node can directly send the switching request to the destination node or the next node, otherwise the first node shall send the switching request to the next node of the connection;
c) after receiving the service switching request, except for the last node, each intermediate node of the re-routing connection performing the switching operation if the current node is a switching node, and then sending the service switching operation request to the next node, otherwise sending the service switching request to the next node directly;
d) after receiving the service switching request, the last node first performing the switching operation, and then informing the first node of the completion of the switching operation if the current node is a switching node, otherwise informing the first node of the completion of the switching operation directly.

7. The method for soft re-routing in the ASON according to Claim 1, **characterized in that** the re-routing connection and the original connection may use the link connection resources of the same transmission network.

8. The method for soft re-routing in the ASON according to Claim 1 or 3, **characterized in that** the soft re-routing connection establishing request in step B includes a re-routing connection identifier.

## Patentansprüche

1. Verfahren zum Soft-Rerouting im Automatic Switching Optical Network ASON, umfassend:
Schritt 1, bei dem ein erster Knoten (A) einer ursprünglich umzuleitenden Verbindung eine gesamte Route einer Rerouting-Verbindung mit demselben ersten Knoten (A) und einem selben letzten Knoten (Z) der ursprünglichen Verbindung bestimmt; dann Auslösen eines Vorgangs zum Herstellen einer Soft-Rerouting-Verbindung und während des Vorgangs der Herstellung der Soft-Rerouting-Verbindung das Durchführen von Brückenverbindungsoperationen durch alle Brückenverbindungsknoten (B) der Rerouting-Verbindung;
Schritt 2, nachdem die Herstellung der Rerouting-Verbindung bestätigt ist, Senden einer Dienstumschaltanfrage durch den ersten Knoten (A) an einen der Rerouting-Verbindung (B, D, F, Z) nachgelagerten Knoten, Durchführen der Umschaltoperation durch alle Umschaltknoten (F) der Rerouting-Verbindung, und, nach Abschluss der Umschaltung, Informieren des ersten Knotens (A) über den Abschluss der Umschaltung;
Schritt 3, bei dem der erste Knoten (A) die ursprüngliche Verbindung löscht, nachdem die Information über den Abschluss der Dienstumschaltung empfangen wurde und die Rerouting-Verbindung abgeschlossen ist.

2. Verfahren zum Soft-Rerouting in ASON nach Anspruch 1, **dadurch gekennzeichnet, dass** die gesamte Route der Rerouting-Verbindung sich auf alle Knoten und Links der Rerouting-Verbindung bezieht.

3. Verfahren zum Soft-Rerouting in ASON nach Anspruch 1, **dadurch gekennzeichnet, dass** Schritt 1 folgende Schritte umfasst:
Schritt A, bei dem der erste Knoten der ursprünglich umzuleitenden Verbindung die gesamte Route der Rerouting-Verbindung mit demselben ersten Knoten und demselben letzten Knoten der ursprünglichen Verbindung bestimmt;
Schritt B, bei dem der erste Knoten den Herstellungsvorgang der Rerouting-Verbindung am aktuellen Knoten beginnt und Anfrage zur Herstellung einer Soft-Rerouting-Verbindung an den nächsten Knoten der Rerouting-Verbindung gesendet wird, wobei der Herstellungsvorgang der Verbindung am aktuellen Knoten beinhaltet, dass die Brückenverbindungsoperation am aktuellen Knoten beginnt, wenn der aktuelle Knoten ein Brückenverbindungsknoten ist;
Schritt C, bei dem nach Empfangen der Anfrage zur Herstellung der Soft-Rerouting-Verbindung, außer für den letzten Knoten, jeder Zwischenknoten der Rerouting-Verbindung den Herstellungsvorgang der Rerouting-Verbindung am aktuellen Knoten beginnt und die Anfrage zur Herstellung der Soft-Rerouting-Verbindung an den nächsten Knoten sendet, wobei der Vorgang der Herstellung der Verbindung amam aktuellen Knoten das Durchführen der Brückenverbindungsoperation am aktuellen Knoten beinhaltet, wenn der aktuelle Knoten ein Brückenverbindungsknoten ist;
Schritt D, bei dem nach Empfangen der Anfrage zur Herstellung der Soft-Rerouting-Verbindung der letzte Knoten den Vorgang der Herstellung der Rerouting-Verbindung am aktuellen Knoten beginnt und nach Abschluss der Rerouting-Herstellung der vorgelagerten Knoten vom Abschluss der Herstellung der Rerouting-Verbindung informiert wird, wobei der Vorgang des Herstellens der Verbindung am aktuellen Knoten das Durchführen der Brückenverbindungsoperation am aktuellen Knoten beinhaltet, wenn der aktuelle Knoten ein Brückenverbindungsknoten ist;
Schritt E, bei dem nach Empfangen der Information über den Abschluss der Rerouting-Verbindung, außer für den ersten Knoten, jeder Zwischenknoten der Rerouting-Verbindung, der den vorgelagerten Knoten vom Abschluss der Herstellung der Rerouting-Verbindung informiert, wenn die Herstellung der Rerouting-Verbindung am aktuellen Knoten abgeschlossen ist, und ansonsten den Abschluss der Herstellung der Rerouting-Verbindung am aktuellen Knoten abwartet und dann den vorgelagerten Knoten vom Abschluss der Herstellung der Rerouting-Verbindung informiert.

4. Verfahren zum Soft-Rerouting in ASON nach Anspruch 1, **dadurch gekennzeichnet, dass** der erste Knoten die gesamte Route der Rerouting-Verbindung gemäß einer Rerouting-Beschränkungsinformation in einer Managementebenenanfrage bestimmt, wobei, wenn der erste Knoten die gesamte Route der Verbindung bestimmt, das Verfahren der Berechnung der gesamten Route der Verbindung wie folgt ist:
der erste Knoten bestimmt die gesamte Route gemäß der aktuellen Routing-Topologieressource; oder
es wird eine andere Steuereinheit für die Berechnung der gesamten Route der Verbindung angefragt.

5. Verfahren zum Soft-Rerouting in ASON nach Anspruch 1, **dadurch gekennzeichnet, dass** Schritt 1 automatisch durch den ersten Knoten der ursprünglichen Verbindung oder manuell ausgelöst wird.

6. Verfahren zum Soft-Rerouting nach Anspruch 1, **dadurch gekennzeichnet, dass** Schritt 2 folgende Schritte umfasst:
a) nachdem bestätigt ist, dass die Herstellung der Rerouting-Verbindung abgeschlossen ist, Überwachen der Rerouting-Verbindung innerhalb eines gewissen Zeitraums durch den ersten Knoten und Ausführen der Operation des nächsten Schritts, wenn kein Fehler in der Rerouting-Verbindung vorhanden ist;
b) wenn der erste Knoten ein Umschaltknoten ist, Ausführen der Umschaltoperation, und dann Senden einer Anfrage für eine Dienstumschaltoperation an einen nachgelagerten Knoten der Rerouting-Verbindung, ansonsten Senden der Anfrage für die Dienstumschaltoperation direkt an den nächsten Knoten; wobei, wenn die Rerouting-Verbindung und die ursprüngliche Verbindung keine Link-Verbindungsressource teilen, der erste Knoten die Umschaltanfrage direkt an den Bestimmungsknoten oder den nächsten Knoten senden kann, andernfalls sendet der erste Knoten die Umschaltanfrage an den nächsten Knoten der Verbindung;
c) nach Empfangen der Dienstumschaltanfrage, außer für den letzten Knoten, Durchführen der Umschaltoperation durch jeden Zwischenknoten der Rerouting-Verbindung, wenn der aktuelle Knoten ein Umschaltknoten ist, und anschließend Senden der Anfrage für die Dienstumschaltoperation an den nächsten Knoten, ansonsten Senden der Dienstumschaltanfrage direkt an den nächsten Knoten;
d) nach Empfangen der Dienstumschaltanfrage, Durchführen der Umschaltoperation durch den letzten Knoten, und dann Informieren des ersten Knotens über den Abschluss der Umschaltoperation, wenn der aktuelle Knoten ein Umschaltknoten ist, ansonsten direktes Informieren des ersten Knotens über den Abschluss der Umschaltoperation.

7. Verfahren zum Soft-Rerouting in ASON nach Anspruch 1, **dadurch gekennzeichnet, dass** die Rerouting-Verbindung und die ursprüngliche Verbindung die Link-Verbindungsressourcen desselben Übertragungsnetzwerks verwenden können.

8. Verfahren zum Soft-Rerouting in ASON nach Anspruch 1 oder 3, **dadurch gekennzeichnet, dass** die Anfrage zum Herstellen der Soft-Rerouting-Verbindung in Schritt B einen Identifikator der Rerouting-Verbindung beinhaltet.

## Revendications

1. Méthode de réacheminement conditionnel dans le réseau optique à commutation automatique, ASON, comprenant :
étape 1, un premier noeud (A) d'une connexion initiale à réacheminer détermine un itinéraire complet d'une connexion de réacheminement avec le même premier noeud (A) et un même dernier noeud (Z) de la connexion initiale ; puis lance un processus d'établissement de connexion de réacheminement conditionnel, et au cours d'un processus d'établissement de connexion du réacheminement conditionnel, tous les noeuds de connexion en pont (B) de la connexion de réacheminement effectuent une opération de connexion en pont ;
étape 2, après la confirmation que l'établissement de connexion de réacheminement est terminé, le premier noeud (A) envoie une demande de commutation de service aux noeuds en aval de la connexion de réacheminement (B, D, F, Z), tous les noeuds de commutation (F) de la connexion de réacheminement effectuent une opération de commutation et informent, lorsque la commutation est terminée, le premier noeud (A) de la fin de la commutation ;
étape 3, le premier noeud (A) supprime la connexion initiale après la réception de l'information de la fin de la commutation de service et la connexion de réacheminement est terminée.

2. Méthode de réacheminement conditionnel dans l'ASON selon la revendication 1, **caractérisée en ce que** l'itinéraire complet de la connexion de réacheminement réfère à tous les noeuds et toutes les liaisons de la connexion de réacheminement.

3. Méthode de réacheminement conditionnel dans l'ASON selon la revendication 1, **caractérisée en ce que** l'étape 1 comprend les étapes suivantes :
étape A, le premier noeud de la connexion initiale à réacheminer détermine l'itinéraire complet de la connexion de réacheminement avec le même premier noeud et le même dernier noeud de la connexion initiale ;
étape B, le premier noeud commence le processus d'établissement de la connexion de réacheminement au noeud actuel, et il envoie une demande d'établissement de connexion de réacheminement à un noeud suivant de la connexion de réacheminement, dans laquelle le processus d'établissement de la connexion au noeud actuel comprend l'exécution de l'opération de connexion en pont sur le noeud actuel si le noeud actuel est un noeud de connexion en pont ;
étape C, après la réception de la demande d'établissement de connexion de réacheminement conditionnel, à l'exception du dernier noeud, chaque noeud intermédiaire de la connexion de réacheminement commence le processus d'établissement de la connexion de réacheminement au noeud actuel, et il envoie la demande d'établissement de connexion de réacheminement conditionnel au noeud suivant, dans laquelle le processus d'établissement de la connexion au noeud actuel comprend l'exécution d'une opération de connexion en pont sur le noeud actuel si le noeud actuel est un noeud de connexion en pont ;
étape D, après la réception de la demande d'établissement de connexion de réacheminement conditionnel, le dernier noeud commence le processus d'établissement de la connexion de réacheminement au noeud actuel, et il informe, lorsque l'établissement de réacheminement est terminé, le noeud en amont de la fin de l'établissement de connexion de réacheminement, dans laquelle le processus d'établissement de la connexion au noeud actuel comprend l'exécution de l'opération de connexion en pont sur le noeud actuel si le noeud actuel est un noeud de connexion en pont ;
étape E, après la réception de l'information concernant la fin de l'établissement de connexion de réacheminement, à l'exception du premier noeud, chaque noeud intermédiaire de la connexion de réacheminement informe le noeud en amont de la fin de l'établissement de connexion de réacheminement si l'établissement de connexion de réacheminement au noeud actuel est terminé, sinon il attend la fin de l'établissement de la connexion de réacheminement au noeud actuel, puis il informe le noeud en amont de la fin de l'établissement de connexion de réacheminement.

4. Méthode de réacheminement conditionnel dans l'ASON selon la revendication 1, **caractérisée en ce que** le premier noeud détermine l'itinéraire complet de la connexion de réacheminement en fonction d'une information de contrainte d'acheminement dans une demande de plan de gestion, dans laquelle, lorsque le premier noeud détermine l'itinéraire complet de la connexion, la méthode de calcul de l'itinéraire complet de la connexion est :
le premier noeud calcule l'itinéraire complet en fonction de la ressource de topologie d'acheminement actuelle ; ou
il demande à une autre unité de commande de calculer l'itinéraire complet de la connexion.

5. Méthode de réacheminement conditionnel dans l'ASON selon la revendication 1, **caractérisée en ce que** l'étape 1 est automatiquement déclenchée par le premier noeud de la connexion initiale ou elle est déclenchée manuellement.

6. Méthode de réacheminement conditionnel dans l'ASON selon la revendication 1, **caractérisée en ce que** l'étape 2 comprend les étapes suivantes :
a) après la confirmation de la fin de l'établissement de connexion de réacheminement, le premier noeud surveille la connexion de réacheminement au cours d'une certaine période de minuterie, et il effectue l'opération de l'étape suivante s'il n'y a pas de défaillance dans la connexion de réacheminement ;
b) si le premier noeud est un noeud de commutation, il exécute l'opération de commutation, puis il envoie une demande d'opération de commutation de service à un noeud en aval de la connexion de réacheminement, sinon il envoie la demande d'opération de commutation de service directement au noeud suivant ; dans laquelle si la connexion de réacheminement et la connexion initiale ne partagent pas une ressource de connexion de liaison, le premier noeud peut envoyer directement la demande de commutation au noeud de destination ou au noeud suivant, sinon le premier noeud doit envoyer la demande de commutation au noeud suivant de la connexion ;
c) après la réception de la demande de commutation de service, à l'exception du dernier noeud, chaque noeud intermédiaire de la connexion de réacheminement effectue l'opération de commutation si le noeud actuel est un noeud de commutation, puis il envoie la demande d'opération de commutation de service au noeud suivant, sinon il envoie la demande de commutation de service directement au noeud suivant ;
d) après la réception de la demande de commutation de service, le dernier noeud effectue d'abord l'opération de commutation, puis il informe le premier noeud de la fin de l'opération de commutation si le noeud actuel est un noeud de commutation, sinon il informe directement le premier noeud de la fin de l'opération de commutation.

7. Méthode de réacheminement conditionnel dans l'ASON selon la revendication 1, **caractérisée en ce que** la connexion de réacheminement et la connexion initiale peuvent utiliser les ressources de connexion de liaison du même réseau de transmission.

8. Méthode de réacheminement conditionnel dans l'ASON selon la revendication 1 ou 3, **caractérisée en ce que** la demande d'établissement de connexion de réacheminement conditionnel à l'étape B comprend un identifiant de connexion de réacheminement.
